# EUROPEAN PATENT APPLICATION

(11) **EP 4 738 453 A1**
(43) Date of publication of application: **06.05.2026**
(21) Application number: 24830538.5
(22) Date of filing: 17.06.2024
(51) Int. Cl.: H01M 4/136, H01M 50/533, H01M 4/131, H01M 10/0525

(54) **ELECTRODE ASSEMBLY, ELECTROCHEMICAL DEVICE AND ELECTRIC DEVICE**

(30) Priority: 29.06.2023 CN 202310788604
(71) Applicant: Dongguan Amperex Technology Limited, Dongguan City, Guangdong Province 523000 (CN)
(72) Inventor: SHEN, Haijie, Dongguan, Guangdong 523000 (CN)
(74) Representative: Dehns Germany Partnerschaft mbB
(86) International application number: PCT/CN2024/099495
(87) International publication number: WO 2025/001892

(57) **Abstract**

An electrode assembly, an electrochemical apparatus, and an electric apparatus are provided, where a positive electrode material layer of the electrode assembly includes a first positive electrode material LiMnₓFe₁₋ₓPO₄, a single-side thickness of the positive electrode material layer is T₁ µm, and 22 ≤ T₁ ≤ 110. A length of a positive electrode plate is L₁ mm. The electrode assembly further includes at least one positive electrode tab. When there is one positive electrode tab, the positive electrode tab is a centrally disposed tab structure; or when there are multiple positive electrode tabs, a ratio of the number of the positive electrode tabs to L₁ is B, and 0.002 ≤ B ≤ 0.01. Synergistically regulating the type of positive electrode material, the single-side thickness of the positive electrode material layer, and the structure of the positive electrode tab enables the electrochemical apparatus to achieve good discharge performance at low temperatures, thereby improving the user experience during use of electrochemical apparatus products.

## Description

This application claims priority to Chinese Patent Application No. 202310788604.6, filed on June 29, 2023, entitled "ELECTRODE ASSEMBLY, ELECTROCHEMICAL APPARATUS, AND ELECTRIC APPARATUS", which is incorporated herein by reference in its entirety.

### TECHNICAL FIELD

This application relates to the field of electrochemical technology, and in particular, to an electrode assembly, an electrochemical apparatus, and an electric apparatus.

### BACKGROUND

With many advantages such as high specific energy density, long cycle life, high nominal voltage, low self-discharge rate, small size, and light weight, lithium-ion batteries are widely used in fields such as portable electronic devices, electric bicycles, electric vehicles, and energy storage devices. Technicians are continuously improving the use performance of lithium-ion batteries, and lithium-ion batteries will continue to hold an important position in the consumer electronics field for a long time.

During the use of lithium-ion batteries, temperature is a critical factor affecting the discharge performance of lithium-ion batteries. As the temperature decreases, the discharge voltage and discharge SOC (State of Charge, State of Charge) of lithium-ion batteries both decline. Some existing products using lithium-ion batteries fail to meet the requirements for complete startup and rapid discharge in low-temperature (for example, a temperature less than or equal to 10°C) environments. Therefore, there is a need for a lithium-ion battery capable of maintaining good discharge performance at low temperatures to improve the user experience during use of lithium-ion battery products.

### SUMMARY

This application is intended to provide an electrode assembly, an electrochemical apparatus, and an electric apparatus, which can achieve good discharge performance at low temperatures. The specific technical solution is as follows.

According to a first aspect of this application, an electrode assembly is provided, including at least one positive electrode plate. The positive electrode plate includes a positive electrode current collector and positive electrode material layers disposed on two surfaces of the positive electrode current collector. The positive electrode material layer includes a first positive electrode material LiMnₓFe₁₋ₓPO₄, 0 ≤ x < 0.95, a single-side thickness of the positive electrode material layer is T₁ µm, and 22 ≤ T₁ ≤ 110. A length of the positive electrode plate is L₁ mm. The electrode assembly further includes at least one positive electrode tab. When there is one positive electrode tab, the positive electrode tab is a centrally disposed tab structure; or when there are multiple positive electrode tabs, a ratio of the number of the positive electrode tabs to L₁ is B, and 0.002 ≤ B ≤ 0.01. Synergistically regulating the type of positive electrode material, the single-side thickness of the positive electrode material layer, and the structure of the positive electrode tab enables the electrochemical apparatus to achieve good discharge performance at low temperatures, thereby improving the user experience during use of electrochemical apparatus products.

In some embodiments of this application, when there are multiple positive electrode tabs, the ratio of the number of the positive electrode tabs to T₁ is A, and 0.05 ≤ A ≤ 0.1. By regulating the value of A within the range provided in this application, the number of the positive electrode tabs matches the single-side thickness of the positive electrode material layer, which can further reduce the discharge impedance of the electrochemical apparatus, increase the initial discharge voltage, and compensate for voltage drop caused by a thick coating technology, thereby further increasing the discharge capacity of the electrochemical apparatus.

In some embodiments of this application, a thickness of the positive electrode tab is T₂ mm, a width of the positive electrode tab is K₂ mm, 0.02 ≤ T₂ ≤ 1, and 1 ≤ K₂ ≤ 20. By regulating the values of T₂ and K₂ to be within the ranges provided in this application, the thickness and width of the tab can be maximized while matching the thickness and width of the overall electrochemical apparatus, thereby minimizing the discharge impedance of the electrochemical apparatus and increasing the initial discharge voltage.

In some embodiments of this application, a width of the positive electrode plate is K₁ mm, a length of a portion of the positive electrode tab located within the positive electrode plate is L₂ mm, and 2 ≤ L₂ ≤ K₁. Preferably, 2 ≤ L₂ ≤ K₁/2. By regulating the relationship between the width of the positive electrode plate and the length of the portion of the positive electrode tab located within the positive electrode plate to be within the ranges provided in this application, the length of the portion of the positive electrode tab within the positive electrode plate matches the width of the positive electrode plate, which can further reduce the discharge impedance of the electrochemical apparatus, and extend the discharge time of the electrochemical apparatus at low temperatures, thereby enabling the electrochemical apparatus to have better discharge performance at low temperatures.

In some embodiments of this application, a length of a portion of the positive electrode tab extending beyond the positive electrode plate is L₃ mm, and 2 ≤ L₃ ≤ 20. By regulating the value of L₃ to be within the range provided in this application, the discharge impedance of the electrochemical apparatus can be further reduced, and the discharge time of the electrochemical apparatus at low temperatures can be extended, thereby enabling the electrochemical apparatus to have better discharge performance at low temperatures.

In some embodiments of this application, the first positive electrode material satisfies at least one of the following characteristics: (1) Dᵥ50 of the first positive electrode material is 0.5 µm to 8 µm; (2) a specific surface area of the first positive electrode material is 2 m²/g to 40 m²/g; or (3) a gram capacity of the first positive electrode material is 140 mAh/g to 190 mAh/g. By regulating the value of at least one of the Dᵥ50, specific surface area, or gram capacity of the first positive electrode material to be within the ranges provided in this application, the electrochemical apparatus can achieve a high discharge capacity at a required low SOC, so that the electrochemical apparatus provided by this application can have a long discharge time and high discharge capacity at low temperatures.

In some embodiments of this application, the positive electrode material layer further includes a second positive electrode material, a conductive agent, and a binder, where based on a mass of the positive electrode material layer, a mass percentage of the first positive electrode material is 1% to 20%, a mass percentage of the second positive electrode material is 70% to 89%, a mass percentage of the conductive agent is 1% to 5%, and a mass percentage of the binder is 1% to 5%. By regulating the mass percentages of the first positive electrode material, the second positive electrode material, the conductive agent, and the binder in the positive electrode active material layer to be within the ranges provided in this application, the electrochemical apparatus can achieve good discharge performance at low temperatures while maintaining high energy density.

In some embodiments of this application, the second positive electrode material includes at least one of lithium nickel cobalt manganese oxide, lithium nickel cobalt aluminum oxide, lithium iron phosphate, lithium-rich manganese-based material, lithium cobalt oxide, lithium manganese oxide, or lithium titanate; the conductive agent includes at least one of conductive carbon black, carbon nanotubes, or graphene; and the binder includes at least one of polyvinylidene fluoride or lithium polyacrylate. By regulating the type of the second positive electrode material to be within the range provided in this application, the electrochemical apparatus can achieve good discharge performance at low temperatures while maintaining high energy density.

According to a second aspect of this application, an electrochemical apparatus is provided, including the electrode assembly according to any of the foregoing embodiments. Therefore, the electrochemical apparatus provided by this application can maintain good discharge performance at low temperatures.

According to a third aspect of this application, an electric apparatus is provided, including the electrochemical apparatus according to any of the foregoing embodiments. Therefore, the electric apparatus provided by this application has good use performance.

The beneficial effects of this application are as follows.

This application provides an electrode assembly, an electrochemical apparatus, and an electric apparatus, where the electrode assembly includes at least one positive electrode plate, the positive electrode plate includes a positive electrode current collector and positive electrode material layers disposed on two surfaces of the positive electrode current collector. The positive electrode material layer includes a first positive electrode material LiMnₓFe₁₋ₓPO₄, and 0 ≤ x < 0.95. A single-side thickness of the positive electrode material layer is T₁ µm, and 22 ≤ T₁ ≤ 110. A length of the positive electrode plate is L₁ mm. The electrode assembly further includes at least one positive electrode tab, where when there is one positive electrode tab, the positive electrode tab is a centrally disposed tab structure; or when there are multiple positive electrode tabs, a ratio of the number of the positive electrode tabs to L₁ is B, and 0.002 ≤ B ≤ 0.01. By synergistically regulating the type of positive electrode material, the single-side thickness of the positive electrode material layer, and the structure of the positive electrode tab, the electrode assembly of this application enables the electrochemical apparatus to achieve good discharge performance at low temperatures, thereby improving the user experience during use of electrochemical apparatus products.

Certainly, implementing any product or method of this application does not necessarily achieve all the advantages described above simultaneously.

### BRIEF DESCRIPTION OF DRAWINGS

To more clearly illustrate the technical solutions of the embodiments of this application or the prior art, the drawings required for the description of the embodiments or the prior art are briefly introduced below. It is apparent that the drawings described below are merely some embodiments of this application, and those skilled in the art can still obtain other embodiments based on these drawings.
FIG. 1 is a low-temperature discharge curve graph of Embodiment 1-1 and Comparative Example 1;
FIG. 2 is a schematic structural diagram of a positive electrode plate according to an embodiment of this application; and
FIG. 3 is a schematic structural diagram of an electrode assembly according to some embodiments of this application.

### DESCRIPTION OF EMBODIMENTS

The technical solutions in the embodiments of this application are clearly and completely described below in conjunction with the drawings in the embodiments of this application. It is apparent that the described embodiments are only some rather than all of the embodiments of this application. All other embodiments obtained by those skilled in the art based on the embodiments of this application fall within the protection scope of this application.

It should be noted that, in the following content, an example in which a lithium-ion battery serves as an electrochemical apparatus is used to explain this application, but the electrochemical apparatus of this application is not limited to lithium-ion batteries. The specific technical solution is as follows.

According to a first aspect of this application, an electrode assembly is provided, including at least one positive electrode plate, where the positive electrode plate includes a positive electrode current collector and positive electrode material layers disposed on two surfaces of the positive electrode current collector. The positive electrode material layer includes a first positive electrode material LiMnₓFe₁₋ₓPO₄, 0 ≤ x < 0.95, a single-side thickness of the positive electrode material layer is T₁ µm, and 22 ≤ T₁ ≤ 110. For example, T₁ may be 22, 23, 25, 30, 35, 40, 45, 50, 55, 60, 65, 70, 75, 80, 85, 90, 95, 100, 105, 110, or a range defined by any two of these values.

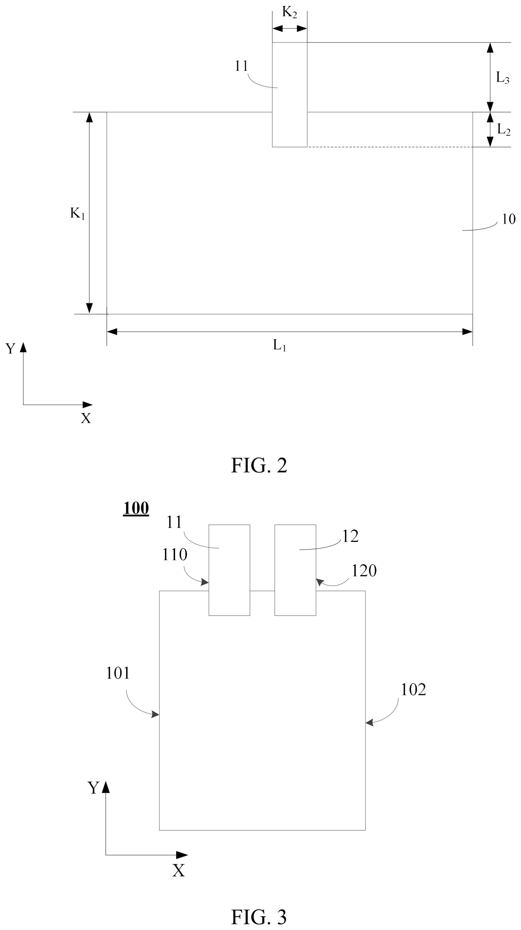

In some embodiments of this application, the electrode assembly further includes at least one positive electrode tab. When the number N of the positive electrode tab is one, the positive electrode tab is a centrally disposed tab structure. The centrally disposed tab structure means that the positive electrode tab is disposed at the center of the positive electrode plate, with a portion of the positive electrode tab being located within the positive electrode plate and another portion extending beyond the positive electrode plate. When the number N of the positive electrode tab is one, the size of the positive electrode plate is not particularly limited in this application, as long as the purpose of this application can be achieved. For example, as shown in FIG. 2, for ease of understanding, a two-dimensional Cartesian coordinate system is established with a length direction of the positive electrode plate 10 as an X direction and a width direction of the positive electrode plate 10 as a Y direction. Along the X direction, the length L₁ of the positive electrode plate 10 may be 100 mm to 2500 mm, and along the Y direction, the width K₁ of the positive electrode plate 10 may be 20 mm to 200 mm.

In some other embodiments of this application, a length of the positive electrode plate is L₁ mm, and when the number N of the positive electrode tabs is multiple, a ratio of the number N of the positive electrode tabs to L₁ is B, and 0.002 ≤ B ≤ 0.01. For example, B may be 0.002, 0.003, 0.004, 0.005, 0.006, 0.007, 0.008, 0.009, 0.01, or a range defined by any two of these values. When the number N of the positive electrode tabs is multiple, the size of the positive electrode plate is not particularly limited in this application, as long as the purpose of this application can be achieved. For example, the length L₁ of the positive electrode plate may be 100 mm to 2500 mm, and the width K₁ of the positive electrode plate may be 20 mm to 200 mm. When the number N of the positive electrode tabs is multiple, if the ratio B of the number N of the positive electrode tabs to L₁ is too small (for example, less than 0.002), the discharge impedance of the electrochemical apparatus cannot be effectively reduced, resulting in a lower initial discharge voltage, thereby leading to a lower discharge capacity and a shorter discharge time; or if the ratio B is too large (for example, greater than 0.01), the discharge impedance of the electrochemical apparatus is accordingly small, and less heat is produced, which cannot increase a backend discharge voltage in a timely manner, leading to a lower discharge capacity and a shorter discharge time.

The inventors have found through research that, on the one hand, a discharge curve of LiMnₓFe₁₋ₓPO₄ has a flat and moderate low-voltage plateau, where a plateau voltage of LiMnₓFe₁₋ₓPO₄ is 3.3 V to 3.6 V, and LiMnₓFe₁₋ₓPO₄ provides a high discharge capacity at a required low SOC. Additionally, electrochemical apparatuses typically have startup power consumption requirements, with a temperature range of 0°C to 25°C and a rate range of 0C to 1C, and LiMnₓFe₁₋ₓPO₄ can also meet the startup rate discharge requirements of the electrochemical apparatuses. On the other hand, the centrally disposed tab structure and multi-tab structure are combined with a thick coating technology for the positive electrode plate, so that the centrally disposed tab structure and multi-tab structure can reduce the discharge impedance, increase the initial discharge voltage, compensate for the voltage drop caused by the thick coating technology, thereby increasing the discharge capacity and extending the discharge time of the electrochemical apparatus at low temperatures. Moreover, in low-temperature environments, the thick coating technology can enhance internal temperature rise of the electrochemical apparatus during discharge, thereby further increasing the discharge capacity of the electrochemical apparatus and extending the discharge time of the electrochemical apparatus at low temperatures. In addition, the thick coating technology can also compensate for energy density loss due to the low gram capacity of LiMnₓFe₁₋ₓPO₄. Besides, LiMnₓFe₁₋ₓPO₄ is a low-cost material, which can also reduce application costs. When the single-side thickness of the positive electrode material layer is too small, for example, less than 22 µm, the internal temperature rise of the electrochemical apparatus during discharge cannot be effectively enhanced. When the single-side thickness of the positive electrode material layer is too large, for example, greater than 110 µm, the discharge impedance is too high, leading to rapid discharge cutoff and a shorter discharge time. Thus, by synergistically regulating the type of positive electrode material, the single-side thickness of the positive electrode material layer, and the structure of the positive electrode tab, their advantages can be complemented, extending the discharge time of the electrochemical apparatus at low temperatures and low voltages and enabling the electrochemical apparatus to achieve good discharge performance at low temperatures, thereby improving the user experience during use of electrochemical apparatus products. In this application, low voltages refer to voltages less than or equal to 3.7 V, and low SOC refers to an SOC less than or equal to 30% SOC.

Based on the above findings, the positive electrode material layer of the electrode assembly provided by this application includes a first positive electrode material LiMnₓFe₁₋ₓPO₄, the single-side thickness of the positive electrode material layer is T₁ µm, and 22 ≤ T₁ ≤ 110; the positive electrode plate in the electrode assembly of this application has the above structure; and by synergistically regulating the type of the positive electrode material, the single-side thickness of the positive electrode material layer, and the structure of the positive electrode tab, the electrochemical apparatus can achieve good discharge performance at low temperatures, thereby improving the user experience during use of electrochemical apparatus products.

In some embodiments of this application, when the number N of the positive electrode tabs is multiple, a ratio of the number N of the positive electrode tabs to T₁ is A, and 0.05 ≤ A ≤ 0.1. For example, A may be 0.05, 0.06, 0.07, 0.08, 0.09, 0.1, or a range defined by any two of these values. By regulating the value of A to be within the range provided in this application, the number of the positive electrode tabs matches the single-side thickness of the positive electrode material layer, which can further reduce the discharge impedance of the electrochemical apparatus, increase the initial discharge voltage, and compensate for the voltage drop caused by the thick coating technology, thereby further increasing the discharge capacity of the electrochemical apparatus.

In some embodiments of this application, a thickness of the positive electrode tab is T₂ mm. As shown in FIG. 2, a width of the positive electrode tab 11 is K₂ mm, 0.02 ≤ T₂ ≤ 1, and 1 ≤ K₂ ≤ 20. For example, T₂ may be 0.02, 0.03, 0.04, 0.05, 0.06, 0.07, 0.08, 0.09, 0.1, 0.2, 0.3, 0.4, 0.5, 0.6, 0.7, 0.8, 0.9, 1, or a range defined by any two of these values, and K₂ may be 1, 2, 3, 4, 5, 6, 7, 8, 9, 10, 11, 12, 13, 14, 15, 16, 17, 18, 19, 20, or a range defined by any two of these values. By regulating the values of T₂ and K₂ to be within the ranges provided in this application, the thickness and width of the tab can be maximized while matching the thickness and width of the overall electrochemical apparatus, thereby minimizing the discharge impedance of the electrochemical apparatus and increasing the initial discharge voltage.

In some embodiments of this application, as shown in FIG. 2, the width of the positive electrode plate 10 is K₁ mm, a length of a portion of the positive electrode tab 11 located within the positive electrode plate 10 is L₂ mm, and 2 ≤ L₂ ≤ 1. Preferably, 2 ≤ L₂ ≤ K₁/2. By regulating the relationship between the width of the positive electrode plate and the length of the portion of the positive electrode tab located within the positive electrode plate to be within the ranges provided in this application, the length of the portion of the positive electrode tab within the positive electrode plate matches the width of the positive electrode plate, which can further reduce the discharge impedance of the electrochemical apparatus and extend the discharge time of the electrochemical apparatus at low temperatures, thereby enabling the electrochemical apparatus to have better discharge performance at low temperatures.

In some embodiments of this application, as shown in FIG. 2, a length of a portion of the positive electrode tab 11 extending beyond the positive electrode plate 10 is L₃ mm, and 2 ≤ L₃ ≤ 20. For example, L₃ may be 2, 3, 4, 5, 6, 7, 8, 9, 10, 11, 12, 13, 14, 15, 16, 17, 18, 19, 20, or a range defined by any two of these values. By regulating the value of L₃ to be within the range provided in this application, the discharge impedance of the electrochemical apparatus can be further reduced, and the discharge time of the electrochemical apparatus at low temperatures can be extended, enabling the electrochemical apparatus to have better discharge performance at low temperatures.

In some embodiments of this application, Dᵥ50 of the first positive electrode material is 0.5 µm to 8 µm. For example, the Dᵥ50 of the first positive electrode material may be 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, or a range defined by any two of these values. In some embodiments of this application, a specific surface area of the first positive electrode material may be 2 m²/g to 40 m²/g. For example, the specific surface area of the first positive electrode material may be 2 m²/g, 5 m²/g, 10 m²/g, 15 m²/g, 20 m²/g, 25 m²/g, 30 m²/g, 35 m²/g, 40 m²/g, or a range defined by any two of these values. In some embodiments of this application, a gram capacity of the first positive electrode material may be 140 mAh/g to 190 mAh/g. For example, the gram capacity of the first positive electrode material may be 140 mAh/g, 145 mAh/g, 150 mAh/g, 155 mAh/g, 160 mAh/g, 165 mAh/g, 170 mAh/g, 175 mAh/g, 180 mAh/g, 185 mAh/g, 190 mAh/g, or a range defined by any two of these values. By regulating the value of at least one of the Dᵥ50, specific surface area, or gram capacity of the first positive electrode material to be within the ranges provided in this application, the electrochemical apparatus can achieve a high discharge capacity at a required low SOC, so that the electrochemical apparatus provided by this application can have a long discharge time and high discharge capacity at low temperatures.

In this application, Dᵥ50 refers to a particle size at which the cumulative volume distribution of the material reaches 50% when measured from the smallest particle size.

Methods for regulating the Dᵥ50, specific surface area, or gram capacity of the first positive electrode material are not particularly limited in this application, as long as the purpose of this application can be achieved, such as extending a mechanical mixing time to reduce the Dᵥ50 and increase the specific surface area; or shortening the mechanical mixing time to increase the Dᵥ50 and reduce the specific surface area. Typically, when the type of the first positive electrode material remains unchanged, the Dᵥ50 and specific surface area of the first positive electrode material also affect the gram capacity of the first positive electrode material. In this application, as the Dᵥ50 of the first positive electrode material decreases, the specific surface area increases, and the gram capacity increases; and as the Dᵥ50 of the first positive electrode material increases, the specific surface area decreases, and the gram capacity of the first positive electrode material decreases.

In some embodiments of this application, the positive electrode material layer further includes a second positive electrode material, a conductive agent, and a binder. Based on a mass of the positive electrode material layer, a mass percentage W1 of the first positive electrode material is 1% to 20%, a mass percentage W2 of the second positive electrode material is 70% to 89%, a mass percentage W3 of the conductive agent is 1% to 5%, and a mass percentage W4 of the binder is 1% to 5%. For example, the mass percentage W1 of the first positive electrode material may be 1%, 2%, 3%, 4%, 5%, 6%, 7%, 8%, 9%, 10%, 11%, 12%, 13%, 14%, 15%, 16%, 17%, 18%, 19%, 20%, or a range defined by any two of these values; the mass percentage W2 of the second positive electrode material may be 70%, 71%, 72%, 73%, 74%, 75%, 76%, 77%, 78%, 79%, 80%, 81%, 82%, 83%, 84%, 85%, 86%, 87%, 88%, 89%, or a range defined by any two of these values; the mass percentage W3 of the conductive agent may be 1%, 2%, 3%, 4%, 5%, or a range defined by any two of these values; and the mass percentage W4 of the binder may be 1%, 2%, 3%, 4%, 5%, or a range defined by any two of these values. By regulating the mass percentages of the first positive electrode material, the second positive electrode material, the conductive agent, and the binder in the positive electrode active material layer to be within the ranges provided in this application, the electrochemical apparatus can achieve good discharge performance at low temperatures while maintaining high energy density.

In some embodiments of this application, the second positive electrode material includes at least one of lithium nickel cobalt manganese oxide, lithium nickel cobalt aluminum oxide, lithium iron phosphate, lithium-rich manganese-based material, lithium cobalt oxide, lithium manganese oxide, or lithium titanate; the conductive agent includes at least one of conductive carbon black, carbon nanotubes, or graphene; and the binder includes at least one of polyvinylidene fluoride or lithium polyacrylate. The lithium nickel cobalt manganese oxide may include, but is not limited to, at least one of LiNi_{0.8}Co_{0.1}Mn_{0.1}O₂ (NCM811), LiNi_{0.6}Co_{0.2}Mn_{0.2}O₂ (NCM622), LiNi_{0.5}Co_{0.2}Mn_{0.3}O₂ (NCM523), or LiNi_{1/3}Co_{1/3}Mn_{1/3}O₂ (NCM111). By regulating the type of the second positive electrode material to be within the ranges provided in this application, the electrochemical apparatus can achieve good discharge performance at low temperatures while maintaining high energy density.

The material of the positive electrode tab is not particularly limited in this application, as long as the purpose of this application can be achieved. For example, the material may be at least one of pure aluminum or nickel-plated copper alloy.

The positive electrode current collector is not particularly limited in this application, as long as the purpose of this application can be achieved. For example, the positive electrode current collector may include aluminum foil, aluminum alloy foil, or a composite current collector (such as an aluminum-carbon composite current collector).

The thickness of the positive electrode current collector is not particularly limited in this application, as long as the purpose of this application can be achieved. For example, the thickness of the positive electrode current collector may be is 6 µm to 20 µm.

Optionally, the positive electrode plate may further include a conductive layer, where the conductive layer is located between the positive electrode current collector and the positive electrode material layer. The composition of the conductive layer is not particularly limited in this application, and the conductive layer may be a conductive layer commonly used in the art. The conductive layer includes a conductive agent and a binder. The conductive agent and binder in the conductive layer are not particularly limited in this application. For example, the conductive agent and binder may be at least one of the conductive agents and at least one of the binders mentioned above.

In this application, the electrode assembly further includes a negative electrode plate, where the negative electrode plate includes a negative electrode current collector and a negative electrode material layer disposed on at least one surface of the negative electrode current collector. That "the negative electrode material layer is disposed on at least one surface of the negative electrode current collector" means that the negative electrode material layer may be disposed on one surface of the negative electrode current collector along a thickness direction of the negative electrode current collector, or on two surfaces of the negative electrode current collector in a thickness direction of the negative electrode current collector. It should be noted that the "surface" here may refer to the entire region of the surface of the negative electrode current collector surface or a partial region of the surface of the negative electrode current collector, which is not particularly limited in this application, as long as the purpose of this application can be achieved.

The negative electrode current collector is not particularly limited in this application, as long as the purpose of this application can be achieved. For example, the negative electrode current collector may include copper foil, copper alloy foil, nickel foil, stainless steel foil, titanium foil, nickel foam, copper foam, or a composite current collector (such as a carbon-copper composite current collector, a nickel-copper composite current collector, or a titanium-copper composite current collector).

The material of the negative electrode tab is not particularly limited in this application, as long as the purpose of this application can be achieved. For example, the negative electrode tab may be at least one of pure nickel, an aluminum-nickel composite strip, nickel-plated copper, nickel-plated copper alloy, pure copper with a nickel-plated copper adapter, or nickel-plated copper alloy.

In this application, the negative electrode material layer includes a negative electrode active material. The negative electrode active material of this application may include one or more of natural graphite, artificial graphite, mesocarbon microbeads (MCMB), hard carbon, soft carbon, a silicon-based active material, Li-Sn alloy, Li-Sn-O alloy, Sn, SnO, SnO₂, spinel-structured lithium titanate Li₄Ti₅O₁₂, Li-Al alloy, and metallic lithium. For example, the negative electrode active material may include artificial graphite and a silicon-based active material, where a mass ratio of the artificial graphite to the silicon-based active material may be (100 to 0):(0 to 100); and the silicon-based active material may include one or more of SiC, SiO, or elemental Si, where a mass ratio of SiC, SiO, and elemental Si may be (1 to 0):(0 to 1):(0 to 1). Particle size distributions Dᵥ10, Dᵥ50, or Dᵥ90 of the negative electrode active material are not particularly limited in this application, as long as the purpose of this application can be achieved. For example, the Dᵥ10 of the negative electrode active material may be 2 µm to 11 µm, the Dᵥ50 may be 12 µm to 20 µm, and the Dᵥ90 may be 21 µm to 28 µm. A specific surface area of the negative electrode active material is not particularly limited in this application, as long as the purpose of this application can be achieved. For example, the specific surface area of the negative electrode active material may be 0.5 m²/g to 3 m²/g. A gram capacity of the negative electrode active material is not particularly limited in this application, as long as the purpose of this application can be achieved. For example, the gram capacity of the negative electrode active material may be 400 mAh/g to 1000 mAh/g.

In this application, Dᵥ10 refers to a particle size at which the cumulative volume distribution of the material reaches 10% when measured from the smallest particle size side, and Dᵥ90 refers to a particle size at which the cumulative volume distribution of the material reaches 90% when measured from the smallest particle size side.

The negative electrode material layer further includes a conductive agent and/or a binder. The types of the conductive agent and binder are not particularly limited in this application, as long as the purpose of this application can be achieved. For example, the conductive agent and binder may be at least one of the conductive agents and at least one of the binders mentioned above. A mass ratio of the negative electrode active material, the conductive agent, and the binder in the negative electrode material layer is not particularly limited in this application, which can be selected by those skilled in the art according to actual needs, as long as the purpose of this application can be achieved.

The thickness of the negative electrode material layer is not particularly limited in this application, as long as the purpose of this application can be achieved. For example, the thickness of the negative electrode material layer may be 30 µm to 150 µm. The thickness of the negative electrode current collector is not particularly limited in this application, as long as the purpose of this application can be achieved. For example, the thickness of the negative electrode current collector may be 3 µm to 16 µm. The thickness of the negative electrode plate is not particularly limited in this application, as long as the purpose of this application can be achieved. For example, the thickness of the negative electrode plate may be 50 µm to 250 µm.

Optionally, the negative electrode plate may further include a conductive layer, where the conductive layer is located between the negative electrode current collector and the negative electrode material layer. The composition of the conductive layer is not particularly limited in this application, and the conductive layer may be a conductive layer commonly used in the art. The conductive layer includes a conductive agent and a binder. The conductive agent and binder in the conductive layer are not particularly limited in this application. For example, the conductive agent and binder may be at least one of the conductive agents and at least one of the binders mentioned above.

In this application, the electrode assembly further includes a separator for separating the positive electrode plate from the negative electrode plate, preventing internal short circuits in the electrochemical apparatus and allowing electrolyte ions to pass through freely, without affecting the electrochemical charge-discharge process. The separator is not particularly limited in this application, as long as the purpose of this application can be achieved. For example, the material of the separator may include, but is not limited to, at least one of polyolefin (PO) mainly including polyethylene (PE) and polypropylene (PP), polyester (for example, polyethylene terephthalate (PET) films), cellulose, polyimide (PI), polyamide (PA), spandex, or aramid. The type of the separator may include at least one of woven film, non-woven film, microporous film, composite film, rolled film, or spun film. For example, the separator may include a substrate layer and a surface treatment layer. The substrate layer may be a non-woven fabric, film, or composite film with a porous structure, and the material of the substrate layer may include at least one of polyethylene, polypropylene, polyethylene terephthalate, or polyimide. Optionally, a polypropylene porous film, polyethylene porous film, polypropylene non-woven fabric, polyethylene non-woven fabric, or polypropylene-polyethylene-polypropylene porous composite film may be used. Optionally, at least one surface of the substrate layer is provided with a surface treatment layer, where the surface treatment layer may be a polymer layer or an inorganic layer, or a layer formed by mixing a polymer and an inorganic material. For example, the inorganic layer includes inorganic particles and a binder, where the inorganic particles are not particularly limited and may include, for example, at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited and may include, for example, at least one of the binders mentioned above. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

According to a second aspect of this application, an electrochemical apparatus is provided, including the electrode assembly according to any of the foregoing embodiments. Therefore, the electrochemical apparatus provided by this application can maintain good discharge performance at low temperatures.

The electrochemical apparatus of this application further includes an electrolyte, where the electrolyte includes a lithium salt and a non-aqueous solvent. The lithium salt may include various lithium salts commonly used in the art, such as at least one of lithium hexafluorophosphate (LiPF₆), LiBF₄, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoroborate. A mass percentage of the lithium salt in the electrolyte is not particularly limited in this application, as long as the purpose of this application can be achieved. The non-aqueous solvent is not particularly limited in this application, as long as the purpose of this application can be achieved. For example, the non-aqueous solvent may include, but is not limited to, at least one of carbonate compounds, carboxylate compounds, ether compounds, or other organic solvents. The carbonate compounds may include, but are not limited to, at least one of linear carbonate compounds, cyclic carbonate compounds, or fluorinated carbonate compounds. The linear carbonate compounds may include, but are not limited to, at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate compounds may include, but are not limited to, at least one of ethylene carbonate (EC), propylene carbonate (PC), butylene carbonate (BC), or vinyl ethylene carbonate (VEC). The fluorinated carbonate compounds may include, but are not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compounds may include, but are not limited to, at least one of methyl formate, methyl acetate, ethyl acetate, n-propyl acetate, tert-butyl acetate, methyl propionate, ethyl propionate, propyl propionate, γ-butyrolactone, decalactone, valerolactone, or caprolactone. The ether compounds may include, but are not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. In this application, the electrolyte may further include an additive, where the additive may be one or more of fluoroethylene carbonate, benzene derivative, 1,3-propane sultone, ethyl propionate, adiponitrile, or glutaronitrile. The benzene derivative may be a combination of one or more of biphenyl, cyclohexylbenzene, tert-amylbenzene, terphenyl, or dibenzofuran, where a mass ratio of the biphenyl, cyclohexylbenzene, tert-amylbenzene, terphenyl, and dibenzofuran may be (1 to 0):(0 to 1):(0 to 1):(0 to 1):(0 to 1).

The electrochemical apparatus of this application further includes a packaging bag for accommodating the electrode assembly and the electrolyte, as well as other components known in the art for electrochemical apparatuses, where these other components are not limited in this application. The packaging bag is not particularly limited in this application, which may be a packaging bag known in the art, as long as the purpose of this application can be achieved.

The electrochemical apparatus of this application is not particularly limited and may include any apparatus in which electrochemical reactions take place. In some embodiments, the electrochemical apparatus may include, but is not limited to, a lithium metal secondary battery, a lithium-ion secondary battery (lithium-ion battery), a lithium polymer secondary battery, or a lithium-ion polymer secondary battery.

A preparation process of the electrochemical apparatus of this application is well known to those skilled in the art, and is not particularly limited in this application. For example, the preparation process may include, but is not limited to, the following steps: stacking a positive electrode plate, a separator, and a negative electrode plate in sequence; performing operations such as winding and folding as needed to obtain an electrode assembly of a wound structure; placing the electrode assembly into a packaging bag; and injecting an electrolyte into the packaging bag, followed by sealing to obtain an electrochemical apparatus. Alternatively, the preparation process includes: stacking a positive electrode plate, a separator, and a negative electrode plate in sequence, and fixing four corners of the entire stacked structure with tapes to obtain an electrode assembly of a stacked structure, placing the electrode assembly into a packaging bag, and injecting an electrolyte into the packaging bag, followed by sealing to obtain an electrochemical apparatus. Additionally, as needed, overcurrent protection elements, guide plates, and the like may be placed in the packaging bag to prevent pressure rise, overcharge, or overdischarge inside the electrochemical apparatus. The packaging bag is a packaging bag known in the art, which is not limited in this application.

According to a third aspect of this application, an electric apparatus is provided, including the electrochemical apparatus according to any of the foregoing embodiments. Therefore, the electric apparatus provided by this application has good use performance.

The electric apparatus is not limited to any particular type in this application, and may be any electric apparatus known in the prior art. In some embodiments, the electric apparatus may include, but is not limited to, notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic organizers, calculators, memory cards, portable recorders, radios, backup power supplies, motors, automobiles, motorcycles, electric bicycles, bicycles, lighting fixtures, toys, gaming consoles, clocks, electric tools, flashlights, cameras, household large-scale storage batteries, and lithium-ion capacitors.

### Examples

The following provides examples and comparative examples to describe the embodiments of this application in more detail. Various tests and evaluations are conducted according to the methods described below. Unless otherwise specified, "parts" and "%" are based on mass.

### Test methods and devices:

### Particle size test:

A particle size of a sample was measured using a laser particle size analyzer (model: MasterSizer 2000). 0.02 g of the sample was added to a 50 mL clean beaker, 20 mL of ethanol was added as a dispersant, the sample was fully dispersed in the ethanol, a resulting mixture was subjected to an ultrasonic treatment for 30 min in a 120 W ultrasonic cleaner, and then the sample was added to the laser particle size analyzer to test the Dᵥ10, Dᵥ50, and Dᵥ90 of the sample.

### Specific surface area test:

A specific surface area of the sample was tested using a specific surface area analyzer (model: Tristar II 3020M) using a nitrogen adsorption method in accordance with the national standard Determination of Specific Surface Area of Solid Materials by Gas Adsorption BET Method (GB/T 19587-2017).

### Gram capacity test:

In a dry room at 25°C with a humidity less than or equal to an RH of 2%, an active material, a binder polyvinylidene fluoride, and a conductive agent acetylene black were mixed at a mass ratio of 80:10:10, an appropriate amount of N-methylpyrrolidone (NMP) solvent was added, and a resulting mixture was stirred thoroughly to form a uniform positive electrode slurry (solid content: 75 wt%); the positive electrode slurry was applied onto a 10 µm thick aluminum foil (positive electrode current collector); and then the aluminum foil was dried, cold-pressed, and punched into a small disc with a diameter of 14 mm as a positive electrode plate. A lithium sheet with a diameter of 14 mm, serving as a negative electrode plate, a polyethylene film with a diameter of 16 mm and a thickness of 12 µm, serving as a separator, and an electrolyte of Example 1 were assembled into a button half cell.

The half cell was subjected to a charge-discharge test on a LAND battery test system (LAND CT2001A). The charge-discharge test was performed within a voltage range of 0.01 V to 2 V with a current density of 10 mA/g, and the first discharge gram capacity was recorded.

When the active material was the first positive electrode material, the measured first discharge gram capacity was the discharge gram capacity of the first positive electrode material; and when the active material was the negative electrode active material (formed by artificial graphite and SiO at a mass ratio of 50:50), the measured first discharge gram capacity was the discharge gram capacity of the negative electrode active material.

### Low-temperature discharge test:

A lithium-ion battery was left standing at 25°C for 5 min, discharged at a constant current of 0.5C to 3.0 V, left standing for 5 min, charged at a constant current of 0.1C for 2 h, left standing for 5 min, and then left standing in a 0°C high-low temperature chamber for 2 h, and then discharged at a constant current of 1C to 3.0 V, and the discharge time was recorded as t min.

### Measurement of length L₁ and width K₁ of positive electrode plate, thickness T₂ and width K₂ of positive electrode tab, length L₂ of portion of positive electrode tab located within positive electrode plate, and length L₃ of portion of positive electrode tab extending beyond positive electrode plate:

A ruler was used to measure the length and width of the positive electrode plate, the width of the positive electrode tab, the length of the portion of the positive electrode tab located within the positive electrode plate, and the length of the portion of the positive electrode tab extending beyond the positive electrode plate three times to obtain an average value.

A micrometer was used to measure the thickness of the positive electrode tab three times to obtain an average value.

### Example 1-1

### <Preparation of positive electrode plate>

In a mixing kettle, a first positive electrode material LiFePO₄, a second positive electrode material lithium cobalt oxide, a conductive agent conductive carbon black, and a binder polyvinylidene fluoride were mixed at a mass ratio of 5:89:3:3, an N-methylpyrrolidone (NMP) solvent was added, and a resulting mixture was stirred thoroughly to form a positive electrode slurry with a solid content of 75 wt%; the positive electrode slurry was uniformly applied onto one surface of a 10 µm thick aluminum foil; and the aluminum foil was dried at 85°C to obtain a positive electrode plate having one surface coated with a positive electrode material layer with a coating thickness of 100 µm. The above steps were repeated on the other surface of the aluminum foil to obtain a positive electrode plate having two surfaces coated with the positive electrode material layers. After cold pressing, slitting, and welding of one positive electrode tab, the positive electrode plate was dried under vacuum at 85°C for 4 h to obtain a positive electrode plate with specifications of 74 mm × 867 mm for later use. The positive electrode tab was a centrally disposed tab structure, and the material of the positive electrode tab was pure aluminum. The Dᵥ50 of the first positive electrode material was 4.5 µm, the specific surface area of the first positive electrode material was 18.0 m²/g, and the gram capacity of the first positive electrode material was 165 mAh/g.

### <Preparation of negative electrode plate>

In a mixing kettle, a negative electrode active material, a conductive carbon black, styrene-butadiene rubber, and sodium carboxymethyl cellulose were mixed at a mass ratio of 96:2:1:1, deionized water was added as a solvent, and a resulting mixture was stirred uniformly to form a negative electrode slurry with a solid content of 40 wt%. The negative electrode slurry was uniformly applied onto one surface of a 6 µm thick negative electrode current collector copper foil, the copper foil was dried at 85°C to obtain a negative electrode plate having one surface coated with a negative electrode material layer with a coating thickness of 100 µm. The above steps were repeated on the other surface of the copper foil to obtain a negative electrode plate having two surfaces coated with the negative electrode material layers. After cold pressing, cutting, and welding of one negative electrode tab, the negative electrode plate was dried under vacuum at 85°C for 12 h to obtain a negative electrode plate with specifications of 78 mm × 875 mm for later use. The negative electrode tab was a centrally disposed tab structure, and the material of the negative electrode tab was pure nickel. The negative electrode active material was formed by artificial graphite and SiO at a mass ratio of 50:50. The Dᵥ10 of the negative electrode active material was 4 µm, the Dᵥ50 of the negative electrode active material was 16 µm, the Dᵥ90 of the negative electrode active material was 26 µm, the maximum particle size Dmax of the negative electrode active material was 35 µm, the specific surface area of the negative electrode active material was 1.5 m²/g, and the gram capacity of the negative electrode active material was 600 mAh/g.

### <Preparation of electrolyte>

In a reactor filled with argon, ethylene carbonate, diethyl carbonate, propylene carbonate, and propyl propionate were gradually added and mixed to uniformity at a mass ratio of 20:30:30:20 to form a base solvent, lithium hexafluorophosphate was added, and a resulting mixture was stirred until the lithium hexafluorophosphate was fully dissolved to obtain an electrolyte. A mass percentage of lithium hexafluorophosphate was 12.5%, with the remainder being the base solvent.

### <Preparation of separator>

A coating layer was uniformly applied onto two surfaces of a separator substrate, where the thickness of the separator substrate was 9 µm, the material of the separator substrate was polyethylene, the total thickness of the coating layer was 3 µm, and the coating layer was a mixture layer of aluminum oxide and polyvinylidene fluoride (at a mass ratio of 9:1).

### <Preparation of lithium-ion battery>

The positive electrode plate, separator, and negative electrode plate were stacked in sequence, with the separator positioned between the positive electrode plate and the negative electrode plate for isolation, and then wound to obtain an electrode assembly. As shown in FIG. 3, the electrode assembly 100 included one positive electrode tab 11 and one negative electrode tab 12. Along an X direction, the electrode assembly 100 included a first edge 101 and a second edge 102 opposite each other, where a distance between an edge 110 of the positive electrode tab close to the first edge 101 and the first edge 101 is 7 mm, and the distance between the edge 120 of the negative electrode tab close to the second edge 102 and the second edge 102 was 10 mm. A thickness T₂ of the positive electrode tab, a width K₂ of the positive electrode tab, a length L₁ of the positive electrode plate, a width K₁ of the positive electrode plate, a length L₂ of a portion of the positive electrode tab located within the positive electrode plate, and a length L₃ of a portion of the positive electrode tab extending beyond the positive electrode plate are shown in Table 1. The electrode assembly was placed in an outer packaging foil, moisture was removed at 80°C, and the prepared electrolyte was injected, followed by vacuum sealing, standing, formation, shaping, and capacity testing processes to obtain a lithium-ion battery.

### Example 1-2

Example 1-2 was the same as Example 1-1 except that in the <Preparation of positive electrode plate>, the positive electrode plate included 10 positive electrode tabs, and in the <Preparation of lithium-ion battery>, each layer of positive electrode plate in the wound structure of the electrode assembly included one positive electrode tab, a relative position of each positive electrode tab in the electrode assembly was the same as in Example 1-1, and the relevant preparation parameters were adjusted according to Table 1.

### Example 1-3

Example 1-3 was the same as Example 1-1 except that in the <Preparation of positive electrode plate>, the positive electrode plate included 10 positive electrode tabs, and in the <Preparation of lithium-ion battery>, the electrode assembly was a stacked structure with each layer of positive electrode plate including one positive electrode tab, a relative position of each positive electrode tab in the electrode assembly was the same as in Example 1-1, and the relevant preparation parameters were adjusted according to Table 1.

### Examples 1-4 to 1-24

Examples 1-4 to 1-24 were the same as Example 1-2 except that in the <Preparation of positive electrode plate> and <Preparation of lithium-ion battery>, the relevant preparation parameters were adjusted according to Table 1.

### Examples 2-1 to 2-9

Example 2-1 to 2-9 were the same as Example 1-2 except that in the <Preparation of positive electrode plate>, the relevant preparation parameters were adjusted according to Table 2.

### Comparative Example 1

Comparative Example 1 was the same as Example 1-1 except that the positive electrode plate was prepared according to the following steps.

### <Preparation of positive electrode plate>

In a mixing kettle, lithium nickel cobalt manganese oxide (NCM523), a conductive agent conductive carbon black, and a binder polyvinylidene fluoride were mixed at a mass ratio of 95:2.5:2.5, an N-methylpyrrolidone (NMP) solvent was added, and a resulting mixture was stirred thoroughly to form a positive electrode slurry with a solid content of 70 wt%. The positive electrode slurry was uniformly applied onto one surface of a 10 µm thick aluminum foil, and the aluminum foil was dried at 85°C to obtain a positive electrode plate having one surface coated with a positive electrode material layer with a coating thickness of 100 µm. The above steps were repeated on the other surface of the aluminum foil to obtain a positive electrode plate having two surfaces coated with the positive electrode material layers. After cold pressing, slitting, and welding of one positive electrode tab, the positive electrode plate was dried under vacuum at 85°C for 4 h to obtain a positive electrode plate with specifications of 74 mm × 867 mm for later use. The positive electrode tab was a centrally disposed tab structure, and the material of the positive electrode tab was pure aluminum.

### Comparative Example 2

Comparative Example 2 was the same as Example 1-2 except that the positive electrode plate was prepared according to the following steps.

### <Preparation of positive electrode plate>

In a mixing kettle, lithium nickel cobalt manganese oxide (NCM523), a conductive agent conductive carbon black, and a binder polyvinylidene fluoride were mixed at a mass ratio of 95:2.5:2.5, an N-methylpyrrolidone (NMP) solvent was added, and a resulting mixture was stirred thoroughly to form a positive electrode slurry with a solid content of 65 wt%. The positive electrode slurry was uniformly applied onto one surface of a 10 µm thick aluminum foil, and the aluminum foil was dried at 85°C to obtain a positive electrode plate having one surface coated with a positive electrode material layer with a coating thickness of 100 µm. The above steps were repeated on the other surface of the aluminum foil to obtain a positive electrode plate having two surfaces coated with the positive electrode material layers. After cold pressing, slitting, and welding of a positive electrode tab, the positive electrode plate was dried under vacuum at 85°C for 4 h to obtain a positive electrode plate with specifications of 74 mm × 1000 mm for later use.

### Comparative Examples 3 and 4

Comparative Examples 3 and 4 were the same as Example 1-2 except that in the <Preparation of positive electrode plate> and <Preparation of lithium-ion battery>, the relevant preparation parameters were adjusted according to Table 1.

In the above Examples 1-2, Examples 1-4 to 1-24, and Comparative Examples 2 to 4, when the electrode assembly was a wound structure, each layer of positive electrode plate was provided with one positive electrode tab, and the relative positions of the positive electrode tabs in the electrode assembly were the same, to be specific, a distance between the edge 110 of the positive electrode tab close to the first edge 101 and the first edge 101 was 7 mm, and a distance between the edge 120 of the negative electrode tab close to the second edge 102 and the second edge 102 was 10 mm. The width of the electrode assembly (that was, the width in the X direction in FIG. 3) varied with the width of the positive electrode plate.

In the above examples and comparative examples, when the length L₁ and width K₁ of the positive electrode plate change, the length and width of the negative electrode plate change accordingly. In addition, the difference between the length of the positive electrode plate and the length of the negative electrode plate is the same as in Example 1-1, and the difference between the width of the positive electrode plate and the width of the negative electrode plate is the same as in Example 1-1.

The preparation parameters and electrical performance parameters of each example and comparative example are shown in Table 1 and Table 2.

**Table 1**

| | T₁ (µm) | N | A | B | L₁ (mm) | T₂ (mm) | K₂ (mm) | K₁ (mm) | L₂ (mm) | L₃ (mm) | t (min) |
|---|---|---|---|---|---|---|---|---|---|---|---|
| Example 1-1 | 100 | 1 | / | / | 867 | 0.8 | 20 | 74 | 66 | 6 | 26.1 |
| Example 1-2 | 100 | 10 | 0.1 | 0.010 | 1000 | 0.1 | 10 | 74 | 50 | 10 | 27.7 |
| Example 1-3 | 100 | 10 | 0.1 | 0.010 | 1000 | 0.12 | 12 | 74 | 40 | 12 | 28.5 |
| Example 1-4 | 55 | 5 | 0.09 | 0.008 | 650 | 0.05 | 5 | 74 | 10 | 10 | 24.6 |
| Example 1-5 | 22 | 2 | 0.09 | 0.010 | 200 | 0.02 | 1 | 74 | 2 | 2 | 22.2 |
| Example 1-6 | 80 | 4 | 0.05 | 0.004 | 900 | 0.06 | 6 | 74 | 10 | 10 | 25.9 |
| Example 1-7 | 40 | 4 | 0.1 | 0.005 | 800 | 0.04 | 3 | 74 | 6 | 18 | 23.2 |
| Example 1-8 | 110 | 5 | 0.05 | 0.002 | 2500 | 0.1 | 10 | 60 | 60 | 10 | 28.6 |
| Example 1-9 | 70 | 5 | 0.07 | 0.005 | 1000 | 0.05 | 5 | 74 | 12 | 8 | 25.5 |
| Example 1-10 | 30 | 3 | 0.1 | 0.01 | 300 | 0.02 | 4 | 70 | 70 | 6 | 23.2 |
| Example 1-11 | 90 | 9 | 0.1 | 0.009 | 1000 | 0.02 | 20 | 80 | 26 | 10 | 26.9 |
| Example 1-12 | 40 | 4 | 0.1 | 0.005 | 867 | 0.5 | 16 | 60 | 22 | 8 | 24.5 |
| Example 1-13 | 60 | 5 | 0.08 | 0.006 | 867 | 1 | 10 | 40 | 20 | 19 | 25.3 |
| Example 1-14 | 100 | 9 | 0.09 | 0.007 | 1300 | 1 | 1 | 40 | 40 | 10 | 27.0 |
| Example 1-15 | 22 | 2 | 0.09 | 0.008 | 240 | 0.5 | 10 | 100 | 44 | 12 | 23.0 |
| Example 1-16 | 50 | 3 | 0.06 | 0.008 | 400 | 0.02 | 20 | 120 | 75 | 20 | 24.6 |
| Example 1-17 | 40 | 4 | 0.1 | 0.005 | 800 | 0.5 | 20 | 74 | 2 | 20 | 23.8 |
| Example 1-18 | 80 | 6 | 0.08 | 0.007 | 880 | 0.06 | 6 | 74 | 36 | 10 | 26.2 |
| Example 1-19 | 100 | 9 | 0.09 | 0.009 | 1000 | 0.1 | 10 | 74 | 74 | 10 | 26.9 |
| Example 1-20 | 70 | 6 | 0.09 | 0.007 | 867 | 0.4 | 14 | 70 | 70 | 2 | 26.0 |
| Example 1-21 | 50 | 4 | 0.08 | 0.005 | 800 | 0.8 | 12 | 66 | 54 | 10 | 25.0 |
| Example 1-22 | 30 | 2 | 0.07 | 0.007 | 300 | 0.05 | 18 | 74 | 35 | 20 | 23.3 |
| Example 1-23 | 100 | 2 | 0.02 | 0.007 | 300 | 0.7 | 16 | 120 | 30 | 8 | 13.6 |
| Example 1-24 | 80 | 16 | 0.2 | 0.009 | 1800 | 0.06 | 6 | 80 | 20 | 10 | 15.6 |
| Comparative Example 1 | 100 | 1 | / | / | 867 | 0.8 | 20 | 74 | 66 | 6 | 5.2 |
| Comparative Example 2 | 100 | 10 | 0.1 | 0.010 | 1000 | 0.1 | 10 | 74 | 50 | 10 | 7.6 |
| Comparative Example 3 | 30 | 2 | 0.07 | 0.001 | 2000 | 1 | 18 | 140 | 50 | 20 | 11.5 |
| Comparative Example 4 | 110 | 10 | 0.09 | 0.02 | 500 | 0.2 | 10 | 50 | 35 | 10 | 12.2 |

| | | | | | | | | | | | |
|---|---|---|---|---|---|---|---|---|---|---|---|
| Note: In Table 1, "/" indicates no relevant preparation parameters. | | | | | | | | | | | |

From Examples 1-1 to 1-24 and Comparative Examples 1 to 4, it can be seen that when the type of positive electrode material, the single-side thickness T₁ of the positive electrode material layer, the ratio B of the number of the positive electrode tabs to the length L₁ of the positive electrode plate, and the structure of the positive electrode tab are within the ranges provided in this application, the lithium-ion battery has a longer low-temperature discharge time, indicating that the lithium-ion battery has better discharge performance at low temperatures, thereby improving the user experience during use of lithium-ion battery products.

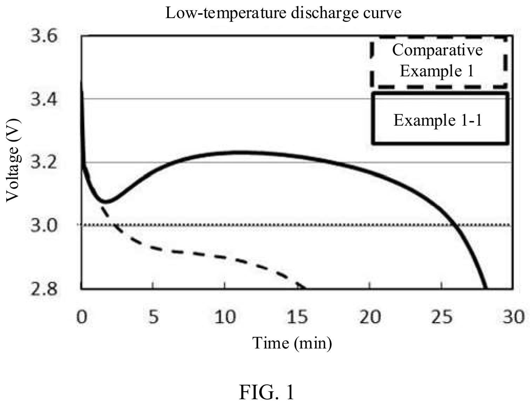

Specifically, as shown in FIG. 1 which is a low-temperature discharge curve graph for the lithium-ion batteries in Example 1-1 and Comparative Example 1, it can be seen that the lithium-ion battery in Example 1-1 has a longer low-temperature discharge time, indicating that the lithium-ion battery in Example 1-1 has better discharge performance at low temperatures.

The value of the ratio A of the number N of the positive electrode tabs to the single-side thickness T₁ of the positive electrode material layer typically affects the low-temperature discharge performance of the lithium-ion battery. From Examples 1-6, 1-7, 1-23, and 1-24, it can be seen that when the value of A is within the range provided in this application, the lithium-ion battery has a longer low-temperature discharge time, indicating that the lithium-ion battery has better discharge performance at low temperatures.

The values of the thickness T₂ of the positive electrode tab and the width K₂ of the positive electrode tab typically affect the low-temperature discharge performance of the lithium-ion battery. From Examples 1-1 to 1-24, it can be seen that when the values of T₂ and K₂ are within the ranges provided in this application, the lithium-ion battery has a longer low-temperature discharge time, indicating that the lithium-ion battery has good discharge performance at low temperatures.

A value relationship between the width K₁ of the positive electrode plate and the length L₂ of the portion of the positive electrode tab located within the positive electrode plate typically affects the low-temperature discharge performance of the lithium-ion battery. From Examples 1-1 to 1-24, it can be seen that when the value relationship between K₁ and L₂ is within the range provided in this application, the lithium-ion battery has a longer low-temperature discharge time, indicating that the lithium-ion battery has good discharge performance at low temperatures.

The value of the length L₃ of the portion of the positive electrode tab extending beyond the positive electrode plate typically affects the low-temperature discharge performance of the lithium-ion battery. From Examples 1-1 to 1-24, it can be seen that when the value of L₃ is within the range provided in this application, the lithium-ion battery has a longer low-temperature discharge time, indicating that the lithium-ion battery has good discharge performance at low temperatures.

**Table 2**

| | x | First positive electrode material | Dᵥ50 of first positive electrode material (µm) | Specific surface area of first positive electrode material (m²/g) | Gram capacity of first positive electrode material (mAh/g) | W1 (%) | W2 (%) | W3 (%) | W4 (%) | t (min) |
|---|---|---|---|---|---|---|---|---|---|---|
| Example 1-2 | 0 | LiFePO₄ | 4.5 | 18 | 165 | 5 | 89 | 3 | 3 | 27.7 |
| Example 2-1 | 0 | LiFePO₄ | 1 | 34 | 186 | 10 | 80 | 5 | 5 | 28.4 |
| Example 2-2 | 0.25 | LiMn_{0.25}Fe_{0.75}PO₄ | 5 | 12 | 170 | 12 | 81 | 4 | 3 | 26.9 |
| Example 2-3 | 0.45 | LiMn_{0.45}Fe_{0.55}PO₄ | 4 | 19 | 165 | 5 | 85 | 5 | 5 | 25.8 |
| Example 2-4 | 0.65 | LiMn_{0.65}Fe_{0.35}PO₄ | 3 | 26 | 155 | 15 | 77 | 4 | 4 | 25.4 |
| Example 2-5 | 0.9 | LiMn_{0.9}Fe_{0.1}PO₄ | 3 | 27 | 148 | 7 | 84 | 5 | 4 | 25.3 |
| Example 2-6 | 0.3 | LiMn_{0.3}Fe_{0.7}PO₄ | 7 | 9 | 168 | 1 | 89 | 5 | 5 | 23.2 |
| Example 2-7 | 0.4 | LiMn_{0.4}Fe_{0.6}PO₄ | 5 | 11 | 166 | 10 | 85 | 2.5 | 2.5 | 23.9 |
| Example 2-8 | 0.5 | LiMn_{0.5}Fe_{0.5}PO₄ | 3 | 28 | 157 | 20 | 75 | 2.5 | 2.5 | 23.5 |
| Example 2-9 | 0.8 | LiMn_{0.8}Fe_{0.2}PO₄ | 6 | 11 | 142 | 30 | 65 | 2.5 | 2.5 | 14.2 |

From Examples 2-1 to 2-5, it can be seen that when the type of positive electrode material, the single-side thickness of the positive electrode material layer, and the structure of the positive electrode tab are within the ranges provided in this application, the lithium-ion battery has a longer low-temperature discharge time, indicating that the lithium-ion battery has better discharge performance at low temperatures, thereby improving the user experience during use of lithium-ion battery products.

The mass percentage W1 of the first positive electrode material, the mass percentage W2 of the second positive electrode material, the mass percentage W3 of the conductive agent, and the mass percentage W4 of the binder typically affect the energy density of the lithium-ion battery. From Examples 2-6 to 2-9, it can be seen that when the values of W1, W2, W3, and W4 are within the ranges provided in this application, the lithium-ion battery has a longer low-temperature discharge time, indicating that the lithium-ion battery has better discharge performance at low temperatures.

The above descriptions are only preferred examples of this application and are not intended to limit the protection scope of this application. Any modifications, equivalent substitutions, improvements, and the like made within the spirit and principles of this application fall within the protection scope of this application.

## Claims

1. An electrode assembly, comprising at least one positive electrode plate, wherein the positive electrode plate comprises a positive electrode current collector and a positive electrode material layer disposed on two surfaces of the positive electrode current collector; wherein, the positive electrode material layer comprises a first positive electrode material LiMnₓFe₁₋ₓPO₄, and 0 ≤ x < 0.95;
a single-side thickness of the positive electrode material layer is T₁ µm, and 22 ≤ T₁ ≤ 110;
a length of the positive electrode plate is L₁ mm;
the electrode assembly further comprises at least one positive electrode tab;
when there is one positive electrode tab, the positive electrode tab is a centrally disposed tab structure; or
when there are multiple positive electrode tabs, a ratio of the number of the positive electrode tabs to L₁ is B, 0.002 ≤ B ≤ 0.01.

2. The electrode assembly according to claim 1, wherein, when there are multiple positive electrode tabs, and a ratio of the number of the positive electrode tabs to T₁ is A, 0.05 ≤ A ≤ 0.1.

3. The electrode assembly according to claim 1, wherein, a thickness of the positive electrode tab is T₂ mm, a width of the positive electrode tab is K₂ mm, 0.02 ≤ T₂ ≤ 1, and 1 ≤ K₂ ≤ 20.

4. The electrode assembly according to claim 1, wherein, a width of the positive electrode plate is K₁ mm, a length of a portion of the positive electrode tab located within the positive electrode plate is L₂ mm, and 2 ≤ L₂ ≤ K₁.

5. The electrode assembly according to claim 4, wherein, a length of a portion of the positive electrode tab extending beyond the positive electrode plate is L₃ mm, and 2 ≤ L₃ ≤ 20.

6. The electrode assembly according to claim 1, wherein, the first positive electrode material satisfies at least one of the following characteristics:
(1) Dᵥ50 of the first positive electrode material is 0.5 µm to 8 µm;
(2) a specific surface area of the first positive electrode material is 2 m²/g to 40 m²/g; or
(3) a gram capacity of the first positive electrode material is 140 mAh/g to 190 mAh/g.

7. The electrode assembly according to claim 1, wherein, the positive electrode material layer further comprises a second positive electrode material, a conductive agent, and a binder, wherein based on a mass of the positive electrode material layer, a mass percentage of the first positive electrode material is 1% to 20%, a mass percentage of the second positive electrode material is 70% to 89%, a mass percentage of the conductive agent is 1% to 5%, and a mass percentage of the binder is 1% to 5%.

8. The electrode assembly according to claim 7, wherein, the second positive electrode material comprises one or more selected from the group consisting of lithium nickel cobalt manganese oxide, lithium nickel cobalt aluminum oxide, lithium iron phosphate, lithium-rich manganese-based material, lithium cobalt oxide, lithium manganese oxide, and lithium titanate; the conductive agent comprises one or more selected from the group consisting of conductive carbon black, carbon nanotubes, and graphene; and the binder comprises at least one of polyvinylidene fluoride or lithium polyacrylate.

9. An electrochemical apparatus, comprising the electrode assembly according to any one of claims 1 to 8.

10. An electric apparatus, comprising the electrochemical apparatus according to claim 9.
